Europäisches Patentamt

European Patent Office

Office européen des brevets

(11) Veröffentlichungsnummer: **0 324 806 B1**

(12) **EUROPÄISCHE PATENTSCHRIFT**

(45) Veröffentlichungstag der Patentschrift: **02.12.92**

(21) Anmeldenummer: **88905378.1**

(22) Anmeldetag: **25.06.88**

(86) Internationale Anmeldenummer:
**PCT/EP88/00562**

(87) Internationale Veröffentlichungsnummer:
**WO 89/00307 (12.01.89 89/02)**

Verbunden mit 88110170.3/0297472
(europäische
Anmeldenummer/Veröffentlichungsnummer)
durch Entscheidung vom 20.12.90.

(51) Int. Cl.⁵: **G05D  13/62**

(54) **SCHALTUNGSANORDNUNG ZUR ANSTEUERUNG VON MOTOREN.**

(30) Priorität: **30.06.87 DE 3721477**

(43) Veröffentlichungstag der Anmeldung:
**26.07.89 Patentblatt  89/30**

(45) Bekanntmachung des Hinweises auf die
Patenterteilung:
**02.12.92 Patentblatt  92/49**

(84) Benannte Vertragsstaaten:
**AT BE CH DE ES FR GB GR IT LI LU NL SE**

(56) Entgegenhaltungen:
**DE-A- 2 719 200**
**DE-A- 3 422 368**
**US-A- 3 443 186**
**US-A- 4 072 883**

**PATENT ABSTRACTS OF JAPAN, Band 10,**
**Nr. 192 (E-417)(2248), 5. Juli 1986;& JP-**
**A-6135183**

(73) Patentinhaber: **Deutsche Thomson-Brandt**
**GmbH**
**Hermann-Schwer-Strasse 3 Postfach 1307**
**W-7730 Villingen-Schwenningen(DE)**

(72) Erfinder: **GLEIM, Günter**
**Oberer Sonnenbühl 22**
**W-7730 Villingen(DE)**

(74) Vertreter: **Einsel, Robert, Dipl.-Ing.**
**Deutsche Thomson-Brandt GmbH Patent-**
**und Lizenzabteilung Göttinger Chaussee 76**
**W-3000 Hannover 91(DE)**

EP 0 324 806 B1

## Beschreibung

Die Erfindung betrifft eine Schaltungsanordnung zur Ansteuerung von Motoren nach dem Oberbegriff des Anspruchs 1.

Bei Motoren für Präzisionsantriebe, bei denen es neben der exakten Einhaltung vorgegebener Drehzahlwerte auch eine schnelle Drehzahländerung und Einnahme der veränderten Drehzahlwerte ankommt, ist es bekannt, die Einflüsse der Wicklungsanordnung mittels einer Kommutierungseinrichtung mit Stromquellen zu verbinden, um so den Rotor des Motors einem vorgegebenen Wechselfeld folgen zu lassen und die Drehzahl durch eine Rückführung zu überwachen. Auf Grund der angetriebenen Masse ist die gewünschte Reaktion des Rotors aber nicht trägheitslos sondern mit einer mehr oder weniger großen Verzögerung verbunden. Siehe z.B. die Patentschrift US-A-3 443 186.

Soll der Rotor eine höhere Drehzahl einnehmen, so kann die Verzögerung dadurch verkleinert werden, daß durch entsprechende Ansteuerung ein hohes positiv gerichtetes Drehmoment auf den Rotor ausgeübt wird, das solange aufrechterhalten bleibt, bis durch die Rückführung das Erreichen der gewünschten Drehzahl erkannt wird und dann die Ansteuerung wieder auf das stationäre, positiv gerichtete Drehmoment reduziert wird, das zur Beibehaltung der Drehzahl erforderlich ist. Eine Veränderung der Drehzahl auf einen kleineren Wert kann dadurch besonders schnell erreicht werden, daß die stationäre Ansteuerung abgeschaltet wird, anschließend ein entgegengesetztes, also negativ gerichtetes Drehmoment aufgebracht wird und nach Erreichen der verminderten Drehzahl wieder zur stationären Ansteuerung zurückgekehrt wird. Ein Problem bei dieser Maßnahme besteht jedoch darin, daß die nach dem Abklingen des negativen gerichteten Drehmoments erreichte Drehzahl nicht immer genau der angestrebten Solldrehzahl entspricht und somit noch ein weiterer Brems- oder Beschleunigungsvorgang erforderlich ist. Zusätzlich muß die Kommutierungsfolge der Anschlüsse der Wicklungsanordnung wieder mit der momentanen Rotordrehung synchronisiert werden.

Es wäre deshalb wünschenswert, die Ansteuerung zur Erzielung eines positiv gerichteten Drehmoments auch während der Zeit aufrechtzuerhalten, in der ein negativ gerichtetes Drehmoment aufgeprägt wird. Dadurch würde über die Rückführung erreicht, daß die Kommutierungsfolge der Anschlüsse der Wicklungsanordnung auch während der Bremsung synchron arbeitet. Hier besteht jedoch das Problem, daß die Ansteuereinrichtungen in ihrer entgegengesetzter Wirkung auf den Rotor einander gegenseitig behindern oder gar zerstören.

Die Erfindung bezieht sich auf das zuletzt genannte Problem. Ihr liegt die Aufgabe zugrunde, eine Schaltungsanordnung zur Ansteuerung von Motoren zu schaffen, die eine sehr präzise und schnell reagierende Änderung der Drehzahl sowohl zu hören als auch zu niedrigeren Drehzahlwerten ermöglicht.

Die Aufgabe wird bei einer Schaltungsanordnung nach dem Oberbegriff des Anspruchs 1 durch die im kennzeichnenden Teil angegebenen Merkmale gelöst.

Die erfindungsgemäßen Maßnahmen gestatten es, dieselbe Wicklungsanordnung zum Beschleunigen und Bremsen zu verwenden. Dabei wird durch die Ausbildung der die Energieeinspeisung in die Wicklungsanordnung vornehmenden Quellen als Stromquellen eine ungestörte Überlagerung der eingespeisten Ströme erreicht, so daß die Energiequellen sich bei gleichzeitigem Wirksamwerden nicht gegenseitig zerstören. Statt einer einzigen Stromquelle können auch Gruppen von Stromquellen vorgesehen werden, wobei die Anzahl der jeder Gruppe zugehörigen Stromquellen oder Teilstromquellen nach der Polzahl des Motors und gegebenenfalls danach bemessen sein kann, ob uni-oder bipolare Ansteuerung gewählt ist.

Vorzugsweise werden die Stromquellen so ausgebildet, daß sie unabhängig voneinander ansteuerbar sind. Auf diese Weise kann bei Vorhandensein einer Drehzahlüberwachung, z.B. mittels Tachogenerator und PLL-Schaltung, die drehzahlsynchrone Kommutierung aufrechterhalten bleiben, während mittels der anderen Stromquelle eine Veränderung der Drehzahl des Motors herbeigeführt wird. Der Motor kann bei Abschalten der anderen Stromquelle dann schneller reagieren und die ursprüngliche Drehzahl erreichen, da nicht abgewartet zu werden braucht, bis die drehzahlsynchrone Kommutierung im Falle einer vorangegangenen Unterbrechung wiederhergestellt ist.

Besonders vorteilhaft ist die erfindungsgemäße Maßnahme anwendbar, wenn die Wicklungsanordnung des Motors bipolar angesteuert wird. Auf diese Weise wird durch bessere Kupferausnutzung ein höheres Drehmoment und damit bei gleichbleibender Masse eine schnellere Reaktion auf Umsteuervorgänge erzielt.

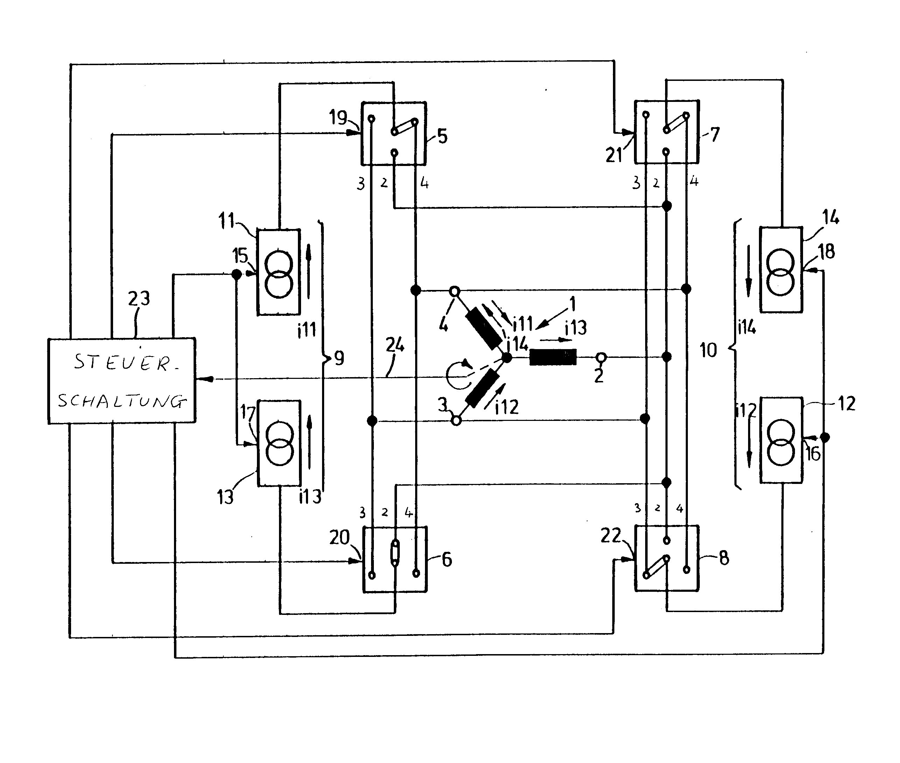

Weiterbildungen und vorteilhafte Ausführungsformen der Erfindung ergeben sich aus den Ansprüchen, der Beschreibung und der Zeichnung, die ein Ausführungsbeispiel der Erfindung veranschaulicht.

Die Zeichnung zeigt als Bestandteil einer Schaltungsanordnung zur Ansteuerung von Motoren im Blockschaltbild eine Anordnung von Stromquellen, die über eine Kommutierungseinrichtung mit Anschlüssen einer Wicklungsanordnung des Motors verbindbar sind. Dabei ist eine dreiphasige Wicklungsanordnung 1 mit Anschlüssen 2, 3 und 4 über Kommutierungseinrichtungen 5, 6, 7 und 8 mit Gruppen von Stromquellen 9 und 10 verbunden. Die Gruppen von Stromquelle 9 und 10 bestehen jeweils aus einer Teilstromquelle 11 bzw. 12 für positiv gerichtete Ströme und aus Teilstromquellen 13 bzw. 14 für negativ gerichtete Ströme. Diese Anordnung gestattet also eine bipolare Ansteuerung des Motors.

Wenn eine der beiden Gruppen von Stromquellen 9 oder 10 in Betrieb sind, so sind immer die dieser Gruppe zugeordneten Teilstromquellen 11 und 13 bzw. 12 und 14 gleichzeitig eingeschaltet. Die Gruppen von Stromquellen 9 dienen zur Beschleunigung während die Gruppen von Stromquellen 10 zur Verzögerung dienen. Mittels der Kommutierungsschaltungen 5 und 7 werden die Teilstromquellen 11 und 13 jeweils mit denjenigen Anschlüssen 2, 3, 4 der Wicklungsanordnung 1 des Motors verbunden, mit denen unter Berücksichtigung der Stellung des anzutreibenden Rotors ein eine Beschleunigung herbeiführendes Drehfeld erzeugbar ist. Entsprechendes trifft für die Bremsung auf die Gruppe von Stromquellen 10 zu, bei der die Teilstromquellen 12 und 14 mittels der Kommutierungsschalteinrichtungen 6 und 8 ebenfalls mit den Anschlüssen 2, 3, 4 der Wicklungsanordnung 1 verbindbar sind. Dabei kann auch der Fall eintreten, daß mit demselben Anschluß gleichzeitig zwei Stromquellen verbunden werden, also z.B. mit dem Anschluß 4 die Teilstromquelle 11 und die die Teilstromquelle 14. Durch die Ausbildung der Energiequellen als Stromquellen tritt hier jedoch nur eine einfache Überlagerung der Ströme ohne eine Gefährdung der Stromquellen selbst ein. Die Kommutierungseinrichtungen 5, 6, 7 und 8 sowie die Gruppen von Stromquellen 9 und 10 besitzen Steuereingänge 15,16,17,18,19,20,21,22, die mit einer Steuerschaltung 23 verbunden sind. Die Steuerschaltung 23 ist dabei phasengestützt, wie durch eine Rückführung 24 angedeutet ist. Dadurch wird erreicht, daß die durch die Stromquellen 11,12,13,14 in der Wicklungsanordnung 1 erzeugten Drehfelder genau der Motordrehbewegung angepaßt sind.

Auf diese Weise ist eine Überlagerung der Drehfelder möglich, die in der gewünschten Weise zu einer Beschleunigung oder einer Bremsung führen kann, ohne daß eine Regelschleife unterbrochen werden muß. Eine Phase aus der kommutierten Ansteuerung, bei der der Wicklungsanordnung 1 sowohl Strom aus der der Beschleunigung dienenden Gruppe 9 von Stromquellen 11,13 als auch Strom aus der der Bremsung dienenden Gruppe 10 von Stromquellen 12,14 zugeführt wird, ist in der Zeichnung veranschaulicht.

In dieser Phase ist die Teilstromquelle 11 mit dem Anschluß 4, die Teilstromquelle 13 mit dem Anschluß 2, die Teilstromquelle 14 mit dem Anschluß 4 und die Teilstromquelle 12 mit dem Anschluß 3 verbunden. In die Wicklungsanordnung 1 fließt dann über den Anschluß 2 ein Strom $-i_{13}$, über den Anschluß 3 ein Strom $+i_{12}$ und über den Anschluß 4 ein Strom $+i_{11}-i_{14}$. Die Indizes stellen dabei den Bezug zur stromliefernden Stromquelle her.

**Patentansprüche**

1. Schaltungsanordnung zur Ansteuerung eines elektronisch kommutierbaren Motors, bei dem die Anschlüsse (2, 3, 4) einer Wickelanordnung (1) mittels einer bestimmten Anzahl von elektronisch steuerbaren Kommutierungseinrichtungen (5, 6, 7, 8) mit Stromquellen (11, 12, 13, 14) verbindbar sind, **dadurch gekennzeichnet, daß**

   a) eine erste steuerbare, mit der Wickelanordnung (1) verbindbare Stromquelle (9) oder Gruppe (9) von steuerbaren, mit der Wickelanordnung (1) verbindbaren Stromquellen (11, 13) zur Erzeugung eines die Beschleunigung des Motors bewirkenden Drehfeldes vorgesehen ist,

   b) eine zweite steuerbare, mit der Wickelanordnung (1) verbindbare Stromquelle (10) oder Gruppe (10) von steuerbaren, mit der Wickelanordnung (1) verbindbaren Stromquellen (12, 14) zur Erzeugung eines die Bremsung des Motors bewirkenden Drehfeldes vorgesehen ist,

   c) Steuereingänge (15, 16, 17, 18) der Stromquellen (9, 10) oder Gruppen (9, 10) von Stromquellen (11, 13; 12, 14) und Steuereingänge (19, 20, 21, 22) der Kommutierungseinrichtungen (5, 6, 7, 8) mit einer Steuerschaltung (23) verbunden sind, die motordrehzahl- und phasengestützt ist,

   d) zum Zwecke schneller Beschleunigungs- bzw. Bremsvorgänge des Motors die Stromquellen (9, 10) oder Gruppen (9, 10) von Stromquellen (11, 13; 12, 14) über die Kommutierungseinrichtungen (5, 6, 7, 8) von der Steuerschaltung (23) so gesteuert werden, daß das die Bremsung bewirkende Drehfeld dem die Beschleunigung bewirkenden Drehfeld überlagert wird, ohne daß dabei eine Regelschleife für die der Beschleunigung dienenden Stromquelle (9) oder Gruppe (9) von Stromquellen (11, 13) unterbrochen werden muß.

2. Schaltungsanordnung nach Anspruch 1, **dadurch gekennzeichnet,** daß die mit den Anschlüssen (2, 3, 4) der Wikkelanordnung (1) verbindbaren Stromquellen (9, 10) oder Gruppen (9, 10) von Stromquellen (11, 12; 13, 14) unabhängig voneinander steuerbar sind.

**3.** Schaltungsansordnung nach Anspruch 1 und/oder 2, **dadurch gekennzeichnet,** daß die Stromquellen (9, 10) oder Gruppen (9, 10) von Stromquellen (11, 12; 13,14) über eine Kommutierungseinrichtung aus elektronisch gesteuerten Schaltern (5, 6, 7, 8) mit den Anschlüssen (2, 3, 4) der Wicklungsanordnung (1) verbindbar sind.

**4.** Schaltungsanordnung nach einem oder mehreren der Ansprüche 1 bis 3, **dadurch gekennzeichnet,** daß die Gruppen (9, 10) von Stromquellen (11, 13; 12, 14) komplementäre, an unterschiedliche Anschlüsse (2, 3, 4) gleichzeitig angelegbare, entgegengesetzt gepolte Teilstromquellen (11; 13; 12; 14) umfaßt.

**5.** Schaltungsanordnung nach Anspruch 4, **dadurch gekennzeichnet,** daß die komplementären Teilstromquellen (11; 13; 12; 14) mittels einer Stromspiegelschaltung steuerbar sind, deren Steuereingänge mit der motordrehzahlund phasengestützten Steuerschaltung (23) verbunden sind.

**6.** Schaltungsanordnung nach einem oder mehreren der Ansprüche 1 bis 5, **dadurch gekennzeichnet,** daß die der Beschleunigung dienenden Stromquellen (11, 13) ständig angesteuert und die der Bremsung dienenden Stromquellen (12, 14) bedarfsweise angesteuert sind.

**Claims**

**1.** Circuit arrangement for the control of an electronically commutatable motor in which the connections (2, 3, 4) of a winding arrangement (1) are connectable to current sources (11, 12, 13, 14) by means of a certain number of electronically controllable commutating devices (5, 6, 7, 8), characterised in that,
a) there is provided a first controllable current source (9) which is connectable to the winding arrangement (1) or group (9) of controllable current sources (11, 13) which is connectable to the winding arrangement (1), for the production of a rotating field effecting the acceleration of the motor,
b) there is provided a second controllable current source (10) which is connectable to the winding arrangement (1) or group (10) of controllable current sources (12, 14) which is connectable to the winding arrangement (1), for the production of a rotating field effecting the braking of the motor,
c) control inputs (15, 16, 17, 18) of the current sources (9, 10) or groups (9, 10) of current sources (11, 13; 12, 14) and control inputs (19, 20, 21, 22) of the commutating devices (5, 6, 7, 8) are connected to a control circuit (23) which is dependent on the motor speed and phase,
d) for the purpose of rapid acceleration or braking of the motor, the current sources (9, 10) or groups (9, 10) of current sources (11, 13; 12, 14) are go controlled by the control circuit (23) via the commutating devices (5, 6, 7, 8) that the rotating field effecting the braking is superimposed on the rotating field effecting the acceleration, without thereby, a control loop for the current source (9) or group (9) of current sources (11, 13) serving for the acceleration having to be interrupted.

**2.** Circuit arrangement in accordance with claim 1, characterised in that, the current sources (9, 10) or groups (9, 10) of current sources (11, 12; 13, 14) connectable to the connections (2, 3, 4) of the winding arrangement (1) are controllable independently of each other.

**3.** Circuit arrangement in accordance with claim 1 and/or claim 2, characterised in that, the current sources (9, 10) or groups (9, 10) of current sources (11, 12; 13, 14) are connectable to the connections (2, 3, 4) of the winding arrangement (1) via a commutating device comprising electronically controlled switches (5, 6, 7, 8).

**4.** Circuit arrangement in accordance with one or more of claims 1 to 3, characterised in that, the groups (9, 10) of current sources (11, 13; 12, 14) comprise complementary oppositely poled partial current sources (11; 13; 12; 14) simultaneously connectable to different connections (2, 3, 4).

**5.** Circuit arrangement in accordance with claim 4, characterised in that, the complementary partial current sources (11; 13; 12; 14) are controllable by means of a current mirror circuit whose control inputs are connected to the motor speed and phase dependent control circuit (23).

**6.** Circuit arrangement in accordance with one or more of claims 1 to 5, characterised in that, the current sources (11, 13) serving for the acceleration are continuously controlled and the current sources (12, 14) serving for the braking are controlled as required.

**Revendications**

**1.** Dispositif de circuit pour l'excitation d'un moteur qui peut être commuté électroniquement dans lequel les raccords (2, 3, 4) d'un dispositif d'enroulements (1) peuvent être reliés à des sources de courant (11, 12, 13, 14) par un certain nombre de dispositifs de commutation (5, 6, 7, 8) qui peuvent être commandés électroniquement, **caractérisé en ce**

a) qu'une première source de courant (9) qui peut être commandée et qui peut être reliée au dispositif d'enroulements (1) ou un premier groupe (9) de sources de courant (11, 13) qui peuvent être commandées et qui peuvent être reliées au dispositif d'enroulements (1) est prévu pour produire un champ magnétique rotatif qui provoque l'accélération du moteur.

b) qu'une seconde source de courant (10) qui peut être commandée et qui peut être reliée au dispositif d'enroulements (1) ou un second groupe (10) de sources de courant (12, 14) qui peuvent être commandées et qui peuvent être reliées au dispositif d'enroulements (1) est prévu pour produire un champ magnétique rotatif qui provoque le freinage du moteur,

c) que des entrées de commande (15, 16, 17, 18) des sources de courant (9, 10) ou des groupes (9, 10) de sources de courant (11, 13 ; 12, 14) et des entrées de commande (19, 20, 21, 22) des dispositifs de commutation (5, 6, 7, 8) sont reliées à un circuit de commande (23) à vitesse et à phase assistée,

d) que, pour obtenir des processus d'accélération ou de freinage du moteur rapides, les sources de courant (9, 10) ou groupes (9, 10) de sources de courant (11, 13 ; 12, 14) sont commandés par l'intermédiaire des dispositifs de commutation (5, 6, 7, 8) par le circuit de commande (23) de telle manière que le champ magnétique rotatif qui provoque le freinage est superposé au champ magnétique rotatif qui provoque l'accélération sans qu'une boucle de régulation pour la source de courant qui sert à l'accélération ou le groupe (9) de sources de courant (11, 13) doive alors être interrompu.

**2.** Dispositif de circuit selon la revendication 1, **caractérisé en ce** que les sources de courant (9, 10) ou groupes (9, 10) de sources de courant (11, 12 ; 13, 14) qui peuvent être reliés aux raccords (2, 3, 4) du dispositif d'enroulements (1) peuvent être commandés indépendamment les uns des autres.

**3.** Dispositif de circuit selon la revendication 1 et/ou 2, **caractérisé en ce** que les sources de courant (9, 10) ou groupes (9, 10) de sources de courant (11, 12 ; 13, 14) peuvent être reliés par un dispositif de commutation composé de commutateurs (5, 6, 7, 8) commandés électroniquement aux raccords (2, 3, 4) du dispositif d'enroulements (1).

**4.** Dispositif de circuit selon l'une ou plusieurs des revendications 1 à 3, **caractérisé en ce** que les groupes (9, 10) de sources de courant (11, 13 ; 12, 14) comprennent des sources partielles de courant (11 ; 13 ; 12 ; 14) complémentaires, de sens de polarisation opposé, qui peuvent être appliquées simultanément à différents raccords (2, 3, 4).

**5.** Dispositif de circuit selon la revendication 4, **caractérisé en ce** que les sources partielles de courant complémentaires (11 ; 13 ; 12 ; 14) peuvent être commandées par un circuit de niveau de courant dont les entrées de commande sont reliées au circuit de commande (23) à vitesse et à phase assistée.

**6.** Dispositif de circuit selon l'une ou plusieurs des revendications 1 à 5, **caractérisé en ce** que les sources de courant (11, 13) qui servent à l'accélération sont constamment excitées et que les sources de courant (12, 14) qui servent au freinage sont excitées au besoin.

STEUER-SCHALTUNG